# EUROPÄISCHE PATENTSCHRIFT

(11) **EP 0 711 800 B1**
(45) Veröffentlichungstag und Bekanntmachung des Hinweises auf die Patenterteilung: **06.05.1999**
(21) Anmeldenummer: 95116406.0
(22) Anmeldetag: 18.10.1995
(51) Int. Cl.: C08J 11/08, C08F 12/08, C08F 2/18, C08J 9/20

(54) **Recyclat enthaltende, expandierbare Styrolpolymerisate**
Expandable styrene polymers containing recycled polystyrenes
Polymères styréniques expansibles contenant du polystyrène recyclé

(30) Priorität: 27.10.1994 DE 4438376
(43) Veröffentlichungstag der Anmeldung: 15.05.1996
(73) Patentinhaber: BASF AKTIENGESELLSCHAFT, 67056 Ludwigshafen (DE)
(72) Erfinder: Scherzer, Dietrich, Dr., D-67433 Neustadt (DE); Husemann, Wolfram, Dr., D-67435 Neustadt (DE); Witt, Michael, Dr., D-67071 Ludwigshafen (DE); Hahn, Klaus, Dr., D-67281 Kirchheim (DE); Kaempfer, Knut, Dr., D-67065 Ludwigshafen (DE); Alicke, Gerhard, D-67549 Worms (DE)

(56) Entgegenhaltungen:
- EP-A- 0 000 513
- EP-A- 0 068 298
- EP-A- 0 379 084
- DE-A- 4 319 180
- DATABASE WPI Derwent Publications Ltd., London, GB; AN 93-164610[20] & JP-A-05 098 062 (SEKISUI PLASTICS CO. LTD.) , 20.April 1993

## Beschreibung

Die Erfindung betrifft Recyclat enthaltende, expandierbare Styrolpolymerisate, die zu Schäumen mit verbesserter Schaumstruktur verarbeitet werden können.

Kunststoffe, die auf Styrol und styrolhaltigen Copolymerisaten basieren, werden in großer Menge produziert und in vielen Bereichen der Technik eingesetzt. Eine große Bedeutung haben hierbei auch geschäumte Produkte.

Die Herstellung und Anwendung dieser Produkte ist seit langem bekannt und vielfach beschrieben.

Ein Problem, das insbesondere in jüngerer Zeit besondere Bedeutung erlangte, ist das Recycling von Altkunststoffen.

Im Falle von Polystyrolschaumstoffen sind hierbei verschiedene Verfahren bekannt.

Eine Möglichkeit besteht darin, Abfälle von Polystyrolschaumstoffen oder ungeschäumtem Polystyrol bei der Extrusion von Polystyrolschaumstoffen einzusetzen. Hierbei kann das Recyclat sowohl allein als auch im Gemisch mit frischem Polystyrol eingesetzt werden.

Die Herstellung von Schäumen aus den Recyclaten kann hierbei wie üblich unmittelbar durch Begasung des Polymerisates im Extruder und anschließende Verschäumung zu Platten oder durch Extrusion zu Minigranulat, das mit Treibmittel imprägniert und verschäumt werden kann, durchgeführt werden.

Weiterhin ist es prinzipiell möglich, das gebrauchte Polystyrol in monomerem Styrol zu lösen und diese Lösung nach bekanntem Verfahren wieder zu polymerisieren. Derartige Verfahren sind beispielsweise in der US-A 5 269 948 oder der JP-A-56 60096 beschrieben, wobei ungeklärt bleibt, wie die Eigenschaften von handelsüblichem EPS-Rohstoff erreicht werden können.

Ein Problem ist, daß das gebrauchte Polystyrol oft stark verunreinigt ist.

In DE-A 42 15 113 wird vorgeschlagen, gebrauchten Polystyrolschaum durch Behandlung mit niederen Alkanen und Alkoholen zu verdichten und gleichzeitig zu reinigen. Nachteilig ist hierbei, daß das Lösungsmittel aufwendig entfernt werden muß.

Aus DE-A 43 19 180 und US-A 5 269 948 ist bekannt, gebrauchtes Polystyrol in monomerem Styrol zu lösen, diese Lösung auf an sich bekannte Weise, z.B. durch Filtration von mechanischen Verunreinigungen zu befreien und diese Lösung anschließend wieder zu polymerisieren. Bei der Suspensionspolymerisation derartiger Lösungen von gebrauchtem Polystyrol in monomerem Styrol kommt es jedoch insbesondere durch Verunreinigungen und gegebenenfalls in dem Recyclat enthaltene Comonomere und Zusatzstoffe häufig zu unerwünscht hohen Innenwassergehalten.

Nachteilig bei den durch Polymerisation von Lösungen von Polystyrol-Recyclat in monomerem Styrol hergestellten Styrolpolymerisaten ist weiterhin, daß die Schaumstruktur der daraus hergestellten Schäume zumeist unerwünscht feinzellig ist.

Aufgabe der Erfindung war es, Recyclat enthaltende expandierbare Polystyrol-Perlpolymerisate mit geringem Innenwassergehalt bereitzustellen, die zu Schäumen mit einer gleichmäßigen Schaumstruktur ohne unerwünschte Feinzelligkeit und guten mechanischen Eigenschaften verarbeitet werden können sowie einfach herzustellen sind.

Die Aufgabe wurde überraschenderweise gelöst durch Polystyrol-Recyclat enthaltende expandierbare Polystyrol-Perlpolymerisate, die dadurch herstellbar sind, daß das Polystyrol-Recyclat in monomerem Styrol oder Mischungen aus mindestens 50 Gew.-% monomerem Styrol mit anderen olefinisch ungesättigten Monomeren gelöst, diese Lösung in eine wäßrige Suspension überführt und nach an sich bekanntem Verfahren polymerisiert wird, wobei im Verlaufe der Polymerisation der Reaktionsmischung 100 bis 500 ppm eines Molekulargewichtsreglers und/oder 0,05 bis 1,0 Gew.-%, jeweils bezogen auf die Polymerisationslösung, eines feinverteilten Polyethylenwachses zugesetzt wird.

Unter dem Begriff Polymerisationslösung wird hierbei die Lösung des Polystyrolrecyclats in dem Monomeren verstanden.

Gegenstand der Erfindung sind demzufolge expandierbare Polystyrol-Perlpolymerisate mit einem Anteil an Polystyrolrecyclat von bis 40 Gew.-%, bezogen auf das Gewicht des Polystyrols, denen im Verlaufe der Polymerisation 100 bis 500 ppm eines Molekulargewichtsreglers und/oder 0,05 bis 1,0 Gew.-%, jeweils bezogen auf die Polymerisationslösung, eines feinverteilten Polyethylenwachses zugesetzt wird.

In der DE-A 43 19 180 sind treibmittelfreie, d. h. nicht expandierbare Styrolpolymerisate beschrieben, die durch Polymerisation einer Lösung von Polystyrol-Recyclat in Monostyrol hergestellt werden, wobei zur Einstellung des Molekulargewichts Kettenüberträger, wie z. B. Mercaptane zugesetzt werden können.

Als Molekulargewichtsregler werden die hierfür bekannten Verbindungen wie t-Butyldodecylmercaptan oder dimerisiertes α-Methylstyrol verwendet. Vorzugsweise eingesetzt wird dimerisiertes α-Methylstyrol.

Als Polystyrolrecyclat können hierbei verschäumte oder unverschäumte Produkte eingesetzt werden. Bei verschäumten Polystyrolrecyclaten sollte vor der Verarbeitung zur Volumenverminderung eine Verdichtung durchgeführt werden.

Diese kann beispielsweise durch Pressen oder Mahlen der Schaumstoffe, aber auch in einem Extruder mit Entgasungsvorrichtung vorgenommen werden.

Die Auflösung des Polystyrolrecyclates in dem Styrolmonomeren kann bei Raumtemperatur oder auch bei leicht erhöhter Temperatur erfolgen. Es ist vorteilhaft, die Auflösung unter Rühren vorzunehmen.

Der Lösung können auch die zur Polymerisation notwendigen Hilfsmittel, Katalysatoren und Zusatzstoffe zugefügt werden. Die Höchstmenge des eingesetzten Recyclats hängt von der Löslichkeit des Polystyrolrecyclats in den Monomeren und der Viskosität der styrolischen Lösung ab. Mit den üblichen Einrichtungen können noch Lösungen mit bis zu 40 Gew.-% Polystyrol gehandhabt werden.

Um eine besonders gute Qualität des EPS-Rohstoffs zu erreichen, ist eine Filtration der Lösung hilfreich.

Zur Durchführung der Polymerisation wird die Lösung in eine wäßrige Suspension überführt und diese nach an sich bekanntem und beispielsweise in EP-A 405 324 beschriebenen Verfahren polymerisiert.

Besonders vorteilhafte Ergebnisse werden erzielt, wenn die Menge des Suspensionsstabilisators auf ca. 0,4 % erhöht wird.

Als Suspensionsstabilisatoren werden die an sich bekannten Verbindungen wie die Molekülkolloide Polyvinylpyrollidon, Polyvinylalkohol oder Pickering-Stabilisatoren wie Tricalciumphosphat und Magnesiumpyrophosphat verwendet.

Die erfindungsgemäß verwendeten Polyethylenwachse haben im allgemeinen ein mittleres Molgewicht (Zahlenmittel) von 2.000 bis 6.000, vorzugsweise von 2.000 bis 4.000 und besonders bevorzugt von 2.800 bis 3.500. Ein besonders geeignetes Polyethylenwachs ist das von der BASF AG angebotene Luwax® mit einem mittleren Molgewicht (Zahlenmittel) von 3.000. Die Polyethylenwachse haben vorzugsweise eine mittlere Teilchengröße von 5 bis 50 µm. Bei zu großen Teilchen gibt es Probleme mit der Verteilung im Polymerisat, bei zu feinen Produkten kann es zu Staubbelästigungen kommen.

Als vinylgruppenhaltiges Monomer wird insbesondere Styrol eingesetzt. Es können jedoch auch Mischungen von Styrol mit anderen vinylgruppenhaltigen Monomeren eingesetzt werden. Diese Mischungen haben vorteilhafterweise einen Styrolgehalt von mindestens 50 Gew.-% Styrol. Als andere vinylgruppenhaltige Monomere werden beispielsweise Acrylnitril, Methylstyrol, kernhalogenierte oder kernalkylierte Styrole, Ester der Acrylsäure oder Methacrylsäure-von Alkoholen mit bis zu 8 Kohlenstoffatomen, N-Vinylverbindungen, wie Vinylcarbazol, oder auch geringe Mengen an Verbindungen verwendet, die zwei polymerisierbare Doppelbindungen enthalten, wie Butadien, Divinylbenzol oder Butadiendiacrylat.

Die Styrolpolymerisate können auch übliche Zusätze an anderen Stoffen enthalten, die den expandierbaren Produkten bestimmte Eigenschaften verleihen. Genannt seien beispielsweise Flammschutzmittel auf Basis von organischen Brom- oder Chlorverbindungen, wie Trisdibrompropylphosphat, Hexabromcyclododecan, Chlorparaffin, sowie Synergisten für Flammschutzmittel, wie Dicumyl und hochzersetzliche organische Peroxide; ferner Antistatika, Stabilisatoren, Farbstoffe, Schmiermittel, Füllstoffe und beim Verschäumen antiverklebend wirkende Stoffe, wie Zinkstearat, Melaminformaldehydkondensate oder Kieselsäure, sowie Mittel zur Verkürzung der Entformzeit beim Ausschäumen, wie Glycerinester oder Hydroxycarbonsäureester. Die Zusatzstoffe können je nach der beabsichtigten Wirkung in den Teilchen homogen verteilt oder als Oberflächenbeschichtung vorliegen.

Zur Herstellung der erfindungsgemäßen Recylcat enthaltenden, expandierbaren Styrolpolymerisate wird das Polystyrolrecyclat zunächst in den vinylgruppenhaltigen Monomeren gelöst.

Zu Beseitigung von mechanischen, in den vinylgruppenhaltigen Monomeren nicht löslichen Verunreinigungen wird die Lösung vor der Polymerisation vorteilhafterweise einer Filtration unterworfen. Hierbei sollte die Maschenweite des verwendeten Siebes möglichst fein sein (50 bis 100 µm), um eine optimale Reinigung der Lösung zu erreichen.

Die Suspensionspolymerisation erfolgt im allgemeinen in Gegenwart von Suspensionsstabilisatoren und üblicher styrollöslicher Polymerisationskatalysatoren.

Das Treibmittel wird bei dem erfindungsgemäßen Verfahren zumeist bereits bei der Polymerisation zugesetzt, es ist jedoch auch möglich, das Treibmittel in einem nachfolgenden Verfahrensschritt in das Styrolpolymerisat einzubringen.

Für die Herstellung von Schaumstoffen werden die expandierbaren Styrolpolymerisatperlen in bekannter Weise durch Erhitzen auf Temperaturen oberhalb ihres Erweichungspunktes, beispielsweise mit Heißluft oder vorzugsweise mit Dampf, expandiert. Die erhaltenen Schaumstoffpartikel können nach dem Abkühlen und gegebenenfalls einer Zwischenlagerung durch erneutes Erhitzen weiter aufgeschäumt werden. Sie können anschließend in bekannter Weise in nicht gasdicht schließenden Formen zu Formteilen verschweißt werden.

Weitere Angaben zu den üblichen Imprägnier-, Extrusions- und Schäumverfahren finden sich beispielsweise im Kunststoffhandbuch, Band 5, Polystyrol, herausgegeben von R. Vieweg und G. Daumiller, Carl-Hanser-Verlag München, 1969.

Die erfindungsgemäßen Polystyrolschaumstoffe zeichnen sich gegenüber anderen Recyclat enthaltenden Polystyrolschaumstoffen durch eine gleichmäßige Schaumstruktur aus. Auch geringe im Recyclat enthaltene Verunreinigungen durch andere Polymere und Zusatzstoffe, die durch die üblichen Reinigungsverfahren nicht entfernt werden können, haben keine nachteiligen Auswirkungen auf die Schaumstruktur der erfindungsgemäßen Produkte.

Damit können auch außerhalb des eigentlichen Produktionsprozesses anfallende verschäumte und unverschäumte Polystyrolabfälle, die unterschiedliche Materialkennwerte und auch zum Teil unterschiedliche Zusatzstoffe aufweisen, nach einem sehr einfachen Verfahren wieder zu hochwertigen Partikelschaumstoffen verarbeitet werden.

Es ist insbesondere auch möglich, flammfest ausgerüstete Polystyrolabfälle wieder zu Polystyrolpartikelschäumen zu verarbeiten.

Die Erfindung soll an nachstehenden Beispielen näher erläutert werden.

### Beispiele 1 bis 16

In einem druckfesten 50 1-Rührkessel aus rostfreiem Stahl wurde eine Mischung aus 19,5 kg voll entsalztem Wasser, 19,5 g Na₄P₂O₇ und 52,7 g MgSO₄ vorgelegt. Hierzu wurden 17 kg einer Lösung der in der Tabelle angegebenen Menge Polystyrolrecylcat in Styrol, 17 g Dibenzoylperoxid, 51 g Dicumylperoxid eingefüllt. Die Mischung wurde innerhalb von 2 h von 25°C auf 100°C und anschließend innerhalb von 5 h von 100°C auf 130°C erhitzt. Bei 130°C wurde die Mischung noch für weitere 3 h gehalten.

Zu der Mischung wurden 55 min nach Erreichen einer Temperatur von 80°C 478 g einer 10 %igen wäßrigen Polyvinylpyrrolidonlösung (K-Wert 90) und die in der Tabelle angegebenen Mengen an Polyethylenwachs (Luwachs® der BASF AG) und/oder dimeres α-Methylstyrol, und nach weiteren 95 min 1,3 kg (entsprechend 7,5 %, bezogen auf das Styrolpolymerisat) n-Pentan zugesetzt.

Die erhaltenen Perlen wurden abzentrifugiert, mit kalter Luft im Gegenstrom getrocknet und mit 0,1 Gew.-%, bezogen auf das Gewicht der unbeschichteten Perlen Ethylen-bis-stearinsäureamid beschichtet.

Anschließend wurde die Perlgrößenfraktion 0,70 bis 1,00 mm herausgesiebt und mit 0,5 Gew.-%, bezogen auf die treibmittelhaltigen Styrolpolymerisate, eines Gemisches aus 40 Gew.-% Citronensäuretristearylester, 50 Gew.-% Glycerinmonostearat und 10 Gew.-% Kieselsäure FK 320 (Firma Degussa) beschichtet.

Es wurde 6 min in einem drucklosen Schäumkasten (Firma Rauscher) vorgeschäumt und von den entstandenen Partikeln die Schaumstruktur bestimmt.

Die genauen Mengenverhältnisse der Einsatzstoffe sowie die Eigenschaften der Schäume sind in Tabelle 1 zusammengestellt.

Das Polystyrolrecyclat hatte eine Viskositätszahl von 60 g/ml, einen in Toluol unlöslichen Rückstand von 0,2 Gew.-% und einen Rückstand nach der Veraschung von 0,05 Gew.-%, jeweils bezogen auf das Gewicht des Recyclats.

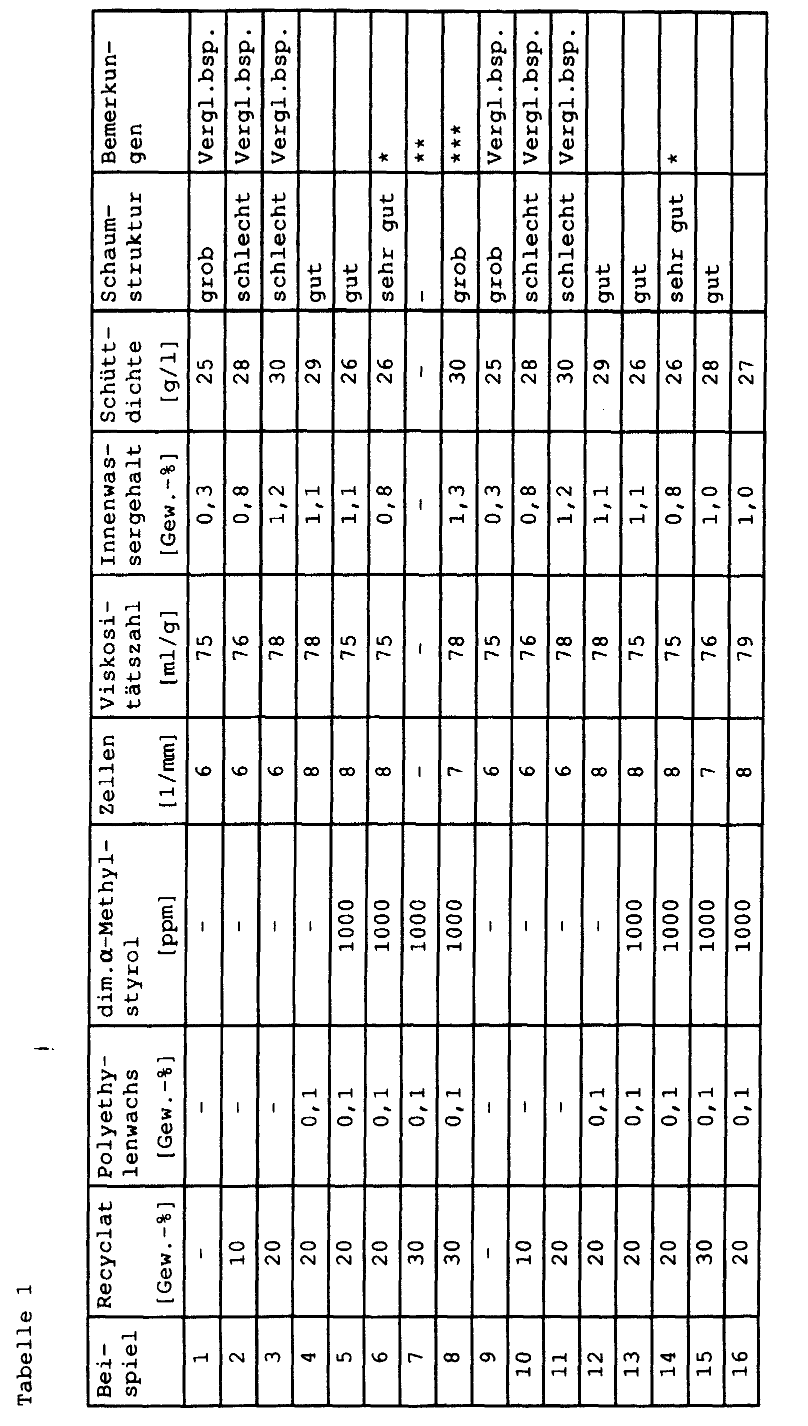

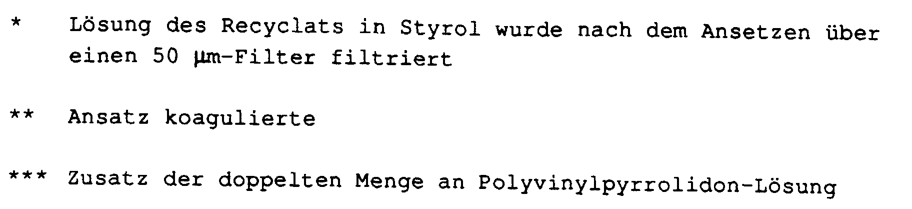

## Patentansprüche

1. Expandierbare Styrolpolymerisate, die bis 40 Gew.-%, bezogen auf das Gesamtgewicht des Polystyrols, Polystyrol-Recyclat enthalten, herstellbar durch Auflösen des Recyclats in monomerem Styrol, Polymerisation dieser Lösung in wässriger Suspension und Zusatz von Treibmittel bei oder nach der Polymerisation, dadurch gekennzeichnet, daß im Verlauf der Polymerisation 0,05 bis 1,0 Gew.-% feinverteilte Polyethylenwachse und/oder 10 bis 500 ppm Molekulargewichtsregler, jeweils bezogen auf die Polymerisationslösung, zugesetzt werden.

2. Expandierbare Styrolpolymerisate nach Anspruch 1, dadurch gekennzeichnet, daß als feinverteilte Polyethylenwachse solche mit einem mittleren Molgewicht (Zahlenmittel) von 2.000 bis 6.000 eingesetzt werden.

3. Expandierbare Styrolpolymerisate nach Anspruch 1, dadurch gekennzeichnet, daß als Molekulargewichtsregler dimerisiertes α-Methylstyrol eingesetzt wird.

## Claims

1. An expandable styrene polymer which contains up to 40% by weight, based on the total weight of the polystyrene, of recycled polystyrene and which can be prepared by dissolving the recycled material in monomeric styrene, polymerizing this solution in aqueous suspension and adding a blowing agent during or after the polymerization, wherein from 0.05 to 1.0% by weight of finely divided polyethylene wax or from 10 to 500 ppm of a molecular weight regulator, in each case based on the polymerization solution, are added in the course of the polymerization.

2. An expandable styrene polymer as claimed in claim 1, wherein the finely divided polyethylene wax used is one having a number average molecular weight of from 2,000 to 6,000.

3. An expandable styrene polymer as claimed in claim 1, wherein the molecular weight regulator used is dimerized α-methylstyrene.

## Revendications

1. Polymères de styrène expansibles qui contiennent, jusqu'à concurrence de 40% en poids rapportés au poids total du polystyrène, un produit de recyclage de polystyrène, que l'on peut préparer par dissolution du produit de recyclage dans du styrène monomère, par polymérisation de cette solution en suspension aqueuse et par addition d'agents moussants lors de la polymérisation ou après cette dernière, caractérisés en ce qu'on ajoute, au cours de la polymérisation, des cires de polyéthylène finement divisées à concurrence de 0,05 à 1,0% en poids et/ou des régulateurs du poids moléculaire à concurrence de 10 à 500 ppm, respectivement rapportés à la solution de polymérisation.

2. Polymères de styrène expansibles selon la revendication 1, caractérisés en ce qu'on met en oeuvre, à titre de cires de polyéthylène finement divisées, des cires possédant un poids moléculaire moyen (moyenne en nombre) de 2.000 à 6.000.

3. Polymères de styrène expansibles selon la revendication 1, caractérisés en ce qu'on met en oeuvre, à titre de régulateurs du poids moléculaire, de l'α-méthylstyrène dimérisé.
